# EUROPÄISCHE PATENTSCHRIFT

(11) **EP 1 119 753 B1**
(45) Veröffentlichungstag und Bekanntmachung des Hinweises auf die Patenterteilung: **25.08.2004**
(21) Anmeldenummer: 99932783.6
(22) Anmeldetag: 02.07.1999
(51) Int. Cl.: G01M 3/20, G01M 3/22

(54) **FOLIENLECKSUCHER UND VERFAHREN ZUR DURCHFÜHRUNG DER LECKSUCHE MIT EINEM FOLIEN-LECKSUCHER DIESER ART**
FILM LEAK DETECTOR AND METHOD FOR CARRYING OUT LEAK DETECTION WITH SUCH A FILM LEAK DETECTOR
DETECTEUR DE FUITE PELLICULAIRE ET PROCEDE POUR DETECTER DES FUITES AVEC UN TEL DETECTEUR DE FUITES PELLICULAIRE

(30) Priorität: 10.10.1998 DE 19846799
(43) Veröffentlichungstag der Anmeldung: 01.08.2001
(73) Patentinhaber: Inficon GmbH, 50968 Köln (DE)
(72) Erfinder: FLOSBACH, Rudolf, D-51688 Wipperfürth (DE); WIDT, Rudi, D-50969 Köln (DE)
(74) Vertreter: Leineweber, Jürgen, Dipl.-Phys.
(86) Internationale Anmeldenummer: PCT/EP1999/004573
(87) Internationale Veröffentlichungsnummer: WO 2000/022399

(56) Entgegenhaltungen:
- DE-A- 19 642 099
- US-A- 3 027 753
- US-A- 4 487 058

## Beschreibung

Die Erfindung betrifft einen Folien-Lecksucher mit einem Testraum, mit einem Testgasdetektor, mit zwei Vakuumpumpen, mit Verbindungsleitungen zwischen den genannten Bauteilen und mit Ventilen in Verbindungsleitungen, bei welchem der Testraum von zwei Folien gebildet wird, die in jeweils einem Rahmen eingespannt sind, einer der Rahmen mit mehreren Bohrungen ausgerüstet ist, die über Leitungsabschnitte und eine sich daran anschließende gemeinsame erste Leitung mit einem ersten Ventil mit einer ersten der beiden Vakuumpumpen verbunden sind, eine der Folien etwa in ihrer Mitte mit einem Leitungsanschluss ausgerüstet ist, an den sich eine zweite Leitung mit einem zweiten Ventil anschließt, und der Testgasdetektor über eine dritte Leitung mit der zweiten Vakuumpumpe verbunden ist. Außerdem bezieht sich die Erfindung auf ein Verfahren zur Durchführung der Lecksuche mit einem Folien-Lecksucher dieser Art.

Folien-Lecksucher der hier betroffenen Art sind aus der DE-A-196 42 099 bekannt. Auch die US-A-30 27 753 offenbart einen Folienlecksucher mit zwei Vakuumpumpen. Beide Vakuumpumpen sind über eine gemeinsame Leitung mit dem etwa in der Mitte einer der Folien angeordneten Leitungsanschluss verbunden.

Nachteilig an den vorbekannten Lösungen ist: Hat ein im Testraum befindlicher Prüfling ein grobes Leck, entweichen daraus relativ große Mengen des Testgases. Sie gelangen über die Verbindungsleitungen zu beiden Vakuumpumpen. Insbesondere dort verursachen sie unerwünschte Verseuchungen.

Der vorliegenden Erfindung liegt die Aufgabe zugrunde, einen Folien-Lecksucher der oben erwähnten Art derart auszubilden und zu betreiben, dass zu Fehlmessungen führende Verseuchungen und/oder Verschmutzungen vermieden werden.

Diese Aufgabe wird durch die in den Patentansprüchen enthaltenen Maßnahmen gelöst. Durch diese Maßnahmen wird erreicht, dass für den Fall, dass ein Prüfling grob-leck ist, größere Mengen von Testgas nur in die erste der beiden Vakuumpumpen gelangen können, d.h., dass gegebenenfalls nur in dieser Vakuumpumpe die beschriebene Kontamination mit Testgas auftritt. Nur in der ersten Evakuierphase geschieht es, dass die auf Lecks zu untersuchende Wandung/Verpackung des Prüflings einen Defekt erleiden, z.B. platzen könnte. Da in dieser Phase die Verbindung zwischen dem Testraum und dem Leckdetektor geschlossen ist, besteht nicht die Gefahr einer Helium-Verseuchung des Testgasdetektors selbst oder der zweiten Vakuumpumpe.

Weitere Vorteile und Einzelheiten der Erfindung sollen anhand von in den Figuren dargestellten Ausführungsbeispielen erläutert werden. Es zeigen
- Figur 1 schematisch einen Folien-Lecksucher nach der Erfindung einschließlich seines Schaltschemas,
- Figur 2 einen Teilschnitt durch die Rahmen, in die die Folien eingespannt sind, und weitere Details in Ansicht sowie
- Figur 3 einen Schnitt durch eine lösbare Verbindung eines an einer Folie befestigten Anschlussstutzens mit einer weiterführenden Leitung und
- Figur 4 einen Prüfling mit einem Flickenleck.

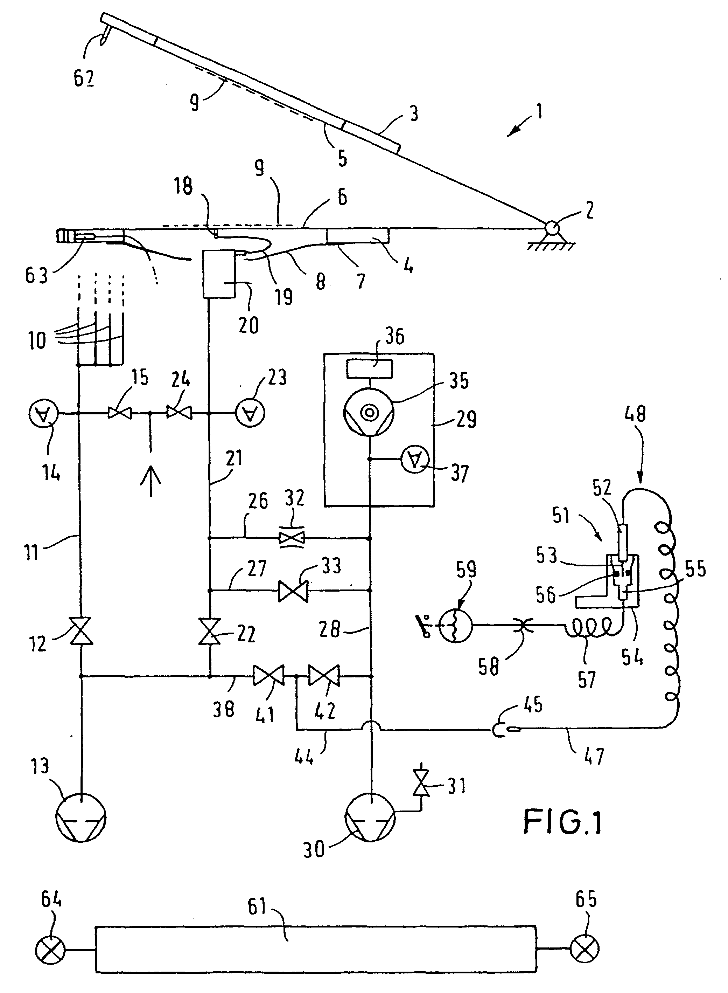

Figur 1 zeigt schematisch den Folien-Lecksucher 1 mit seinen beiden über das Gelenk 2 verbundenen Rahmen 3 und 4 sowie den darin eingespannten Folien 5 und 6. Die Rahmen 3 und 4 sind kreisförmig. Der untere Rahmen stützt sich auf dem Rand 7 eines tellerförmigen Bodens 8 - vorzugsweise aus Stahl - ab. Auf den Folien 5, 6 befindliche Vlies-Abschnitte 9 sichern die Bildung eines zusammenhängenden Testraumes bei eingelegtem Prüfling. Der prinzipielle Aufbau eines Folien-Lecksuchers dieser Art ist im übrigen aus der DE-A-196 42 099 bekannt.

Der untere Rahmen 4 ist mit mehreren im einzelnen nicht dargestellten Bohrungen ausgerüstet, die in das Innere des Testraumes münden, der von den beiden Folien 5, 6 bei eingelegtem Prüfling gebildet wird. An diese Bohrungen sind die Leitungsabschnitte 10 angeschlossen, die über die gemeinsame Leitung 11 mit dem Ventil 12 mit der Vorvakuumpumpe 13 in Verbindung stehen. In Bezug auf das Ventil 12 stromaufwärts sind an die Leitung 11 noch das Druckmessgerät 14 und das Belüftungsventil 15 angeschlossen.

Die untere Folie 6 ist etwa in ihrer Mitte mit einem Leitungsanschluss 18 ausgerüstet, an die sich der Leitungsabschnitt 19, der Filter 20 und die Leitung 21 mit dem Ventil 22 anschließen. Auch die Leitung 21 ist mit einem Druckmessgerät 23 und mit einem Belüftungsventil 24 ausgerüstet.

Der Abschnitt der Leitung 21, der sich zwischen dem Anschluss des Druckmessgerätes 23 und dem Ventil 22 befindet, steht über zwei zueinander parallele Leitungen 26 und 27 mit einer Leitung 28 in Verbindung, die sich zwischen dem Testgasdetektor 29 und einer zweiten Vorvakuumpumpe 30 erstreckt. In der Leitung 26 befindet sich ein Drosselventil 32. Die Leitung 27 ist mit einem Ventil 33 ausgerüstet.

Die Vorvakuumpumpe 13 ist zweckmäßig einstufig, die Vorvakuumpumpe 30 zweistufig ausgebildet. Die Pumpe 30 ist mit einer Gasballast-Einrichtung ausgrüstet. Bei offenem Ventil 31 strömt Luft (oder auch Inertgas) in die Pumpe 30 ein.

Im Testgasdetektor 29 befindet sich eine Turbomolekularvakuumpumpe 35, deren Auslass mit der Leitung 28 in Verbindung steht. An den Einlass der Turbomolekularvakuumpumpe ist ein Massenspektrometer 36 angeschlossen. Außerdem ist ein Druckmessgerät 37 Bestandteil des Leckdetektors 29, welches den Druck in der Leitung 28 misst.

Die beiden Leitungen 11 und 28 stehen in Bezug auf die Ventile 12 und 22 stromabwärts über eine Leitung 38 in Verbindung, in die auch die Leitung 21 mündet. In dieser Leitung 38 befinden sich zwischen der Mündung der Leitung 21 und der Leitung 28 die Ventile 41 und 42. In den zwischen den Ventilen 41 und 42 befindlichen Abschnitt der Leitung 38 mündet eine Leitung 44, die mit einer Kupplung 45 in Verbindung steht. Die Kupplung 45 dient der Herstellung der Verbindung der Leitung 44 mit der Schnüffelleitung 47 eines Schnüfflers 48. Die mit 51 bezeichnete Schnüffelsonde des Schnüfflers 48 umfasst den Handgriff 52 und die Schnüffelspitze 53.

Für die Ablage der Schnüffelsonde ist ein Halter 54 vorgesehen. Dieser ist entweder am Folien-Lecksucher 1 befestigt oder als separater Ständer ausgebildet. Er weist einen Hohlraum 55 auf, der bei abgelegter Sonde 51 die Schnüffelspitze aufnimmt. Außerdem ist eine Dichtung 56 vorgesehen, die den Hohlraum 55 bei abgelegter Sonde 51 gegenüber dem Handgriff 52 abdichtet. An den Hohlraum 55 schließt sich eine Leitung 57 an, die über eine Kupplung 58 mit einem im Gehäuse des Folien-Lecksuchers 1 untergebrachten Unterdruckschalter 59 in Verbindung steht. Als Schnüffelleitung 47 dient in bekannter Weise eine Kapillare (Durchmesser ca. 0,5 mm). Dieses gilt auch für die Leitung 57, damit sich der von der Schnüffelspitze 53 im Raum 55 erzeugte Unterdruck schnell auf den Unterdruckschalter 59 auswirkt.

Im Folien-Lecksucher nach Figur 1 läuft der Lecksuchzyklus automatisch ab. Zur Steuerung des Ablaufs ist die nur als Block 61 dargestellte Steuerzentrale vorgesehen. Mit ihr sind alle Messgeräte und alle zu steuernden Bauteile verbunden. Dieses gilt auch für einen Schalter, der mit dem Schließen des Testraumes betätigt wird. Beim dargestellten Ausführungsbeispiel handelt es sich um einen Näherungsschalter, der einen am Rahmen 3 vorgesehenen Metallstift 62 und einen am Rahmen 4 angeordneten Sensor 63 umfasst. Der Sensor 63 steht mit der Steuerzentrale 61 in Verbindung. Auch andere Schalter, seien sie elektrisch, mechanisch oder optisch betrieben, können zu diesem Zweck eingesetzt werden.

Die Vielzahl der elektrischen Verbindungsleitungen zwischen der Steuerzentrale 61 und den Bauteilen sind der Übersichtlichkeit halber nicht dargestellt. Mit der Steuerzentrale verbunden sind auch zwei Signallampen 64, 65, von denen eine grün, wenn ein Prüfling als dicht, und die andere rot aufleuchtet, wenn ein Prüfling als undicht erkannt wird.

Beim betriebsbereiten Folien-Lecksucher 1 sind, wenn der Testraum - wie in Figur 1 dargestellt - geöffnet bzw. der obere Rahmen 3 vom unteren Rahmen 4 abgehoben ist, sämtliche Ventile - bis auf das Ventil 41 - geschlossen. Nach dem Auflegen eines Prüflings auf die untere Folie 6 und nach dem Auflegen des oberen Rahmens 3 auf den unteren Rahmen 4 löst der Näherungsschalter 62, 63 den Ablauf eines Lecksuchvorganges aus. Dazu wird zunächst geprüft, ob sich im System ein erhöhter Heliumuntergrund befindet, der Leckmessungen verfälschen könnte. Dieses geschieht mit Hilfe des Massenspektrometers 36. Meldet es einen zu hohen Untergrund, wird das Ventil 31 geöffnet und die Pumpe 30 so lange mit Gasballast betrieben, bis der Heliumuntergrund einen unschädlichen Wert angenommen hat.

In der Regel ist ein erhöhter Helium-Untergrund nicht vorhanden, so dass mit dem Schließen des Testraumes auch der eigentliche Lecksuchzyklus beginnt. Zunächst werden die Ventile 12 und 22 geöffnet. Dieses hat eine äußerst schnelle Evakuierung des Raumes zwischen den Folien 5, 6 zur Folge. Außerhalb der Bereiche, in denen sich die Vlies-Abschnitte 9 befinden, bilden die sich unmittelbar berührenden Folien 5, 6 die Abdichtung des Testraumes.

Von Bedeutung ist, dass in der ersten Evakuierphase nur die Ventile 12 und 22 geöffnet sind. Nur in dieser ersten Phase geschieht es, dass die auf Lecks zu untersuchende Wandung/Verpackung des Prüflings einen Defekt erleiden, z.B. platzen könnte. Da in dieser Phase Verbindungen zwischen dem Testraum und dem Leckdetektor geschlossen ist, besteht nicht die Gefahr einer Helium-Verseuchung oder einer Verschmutzung durch aus dem Prüfling austretendes Produkt.

Bei einem Druck von wenigen 100 mbar (100 bis 300 mbar) wird das Drosselventil 32 geöffnet. Es ist so bemessen, dass der notwendige Vorvakuumdruck der Turbomolekularvakuumpumpe 35 keine unzulässig hohen Werte annimmt. Mit dem Öffnen des Drosselventils 32 beginnt die Groblecksuche. Strömt Helium durch das Drosselventil 32, gelangt es im Gegenstrom durch die Turbomolekularpumpe 35 zum Massenspektrometer 36. Wird Helium registriert, ist der Prüfling undicht; der Lecksuchzyklus wird abgebrochen.

Für den Fall, dass Helium noch nicht registriert wird, wird der Evakuierprozess fortgesetzt. Erreicht der Druck einen mit dem Gerät 23 gemessenen Wert, der in der Größenordnung des Vorvakuumdruckes der Turbomolekularpumpe 35 liegt, werden die Ventile 12, 22 und 32 geschlossen und das Ventil 33 geöffnet. Es beginnt die Phase der empfindlichen Lecksuche. Diese wird abgebrochen, wenn entweder Testgas registriert wird, der Prüfling also undicht ist, oder nach einer bestimmten Zeit. Entweder wird eine feste Zeitspanne vorgegeben oder es wird so lange geprüft, bis der Druck (gemessen mit dem Gerät 23) einen bestimmten Wert unterschreitet. Wird innerhalb dieser Zeit Testgas nicht registriert, lässt dieses Ergebnis auf einen dichten Prüfling schließen.

Während der empfindlichen Lecksuchphase stellen nur die Leitungen 19, 21 und 27 die Verbindung zwischen dem Testraum und dem Leckdetektor 29 dar. Ein Platzen des Prüflings ist nicht mehr zu erwarten. Im übrigen befindet sich zwischen den Leitungen 19 und 21 der Partikelfilter 20, der jede Verunreinigung vom Leckdetektor 29 fernhält.

Die Beendigung des Lecksuchzyklus erfolgt in der Weise, dass alle bisher offenen Ventile - bis auf Ventil 41 - geschlossen und die Ventile 15, 24 geöffnet werden. Der Testraum wird belüftet, der obere Rahmen 3 kann vom unteren Rahmen 4 abgehoben werden. Zweckmäßig ist es, wenn die beiden gelenkig miteinander verbundenen Rahmen 3, 4 im Bereich des Gelenks 2 unter der Wirkung einer nicht dargestellten Federeinrichtung stehen, deren Kraft ständig in Öffnungsrichtung wirkt. Ihre Kraft sollte so bemessen sein, dass das während der Lecksuche erzeugte Vakuum den Testraum geschlossen hält und dass der Rahmen 3 nach dem Belüftungsvorgang seine Offenstellung einnimmt.

Wird während der Leckprüfung festgestellt, dass ein Prüfling undicht ist, dann ist der Benutzer daran interessiert, den Ort des Lecks kennenzulernen. Dazu ist der erfindungsgemäße Folienlecksucher mit einem Schnüffler 48 ausgerüstet. Dieser ist mit seiner Schnüffelleitung 47 über die Kupplung 45 an die Leitung 44 angeschlossen.

Solange der Schnüffler 48 nicht genutzt wird, ist er in einem Halter 54 abgelegt. Dieser Halter 54 ist mit den bereits beschriebenen Mitteln 55 bis 59 ausgerüstet, mit deren Hilfe die Steuerzentrale 61 erkennen kann, ob die Sonde 51 im Halter 54 abgelegt ist oder nicht. Auch andere Mittel - seien es mechanisch, elektrisch oder induktiv betätigte Schalter - können zu diesem Zweck verwendet werden.

Solange sich die Sonde 51 im Halter 54 befindet, wird - wie bereits erwähnt - das Ventil 41 offengehalten. Der Schnüffler befindet sich dadurch ständig im stand by. Erst dann, wenn er aus seinem Halter 54 herausgenommen wird, schließt das Ventil 41 und öffnet das Ventil 42. Der den Schnüffler 48 durchsetzende Gasstrom gelangt dadurch in die Leitung 28 und wird von der Pumpe 30 aufrechterhalten. In diesem Zustand ist die Schnüffellecksuche möglich. Wird Helium von der Schnüffelspitze 53 aufgenommen, gelangt es im Gegenstrom durch die Turbomolekularpumpe 35 zum Massenspektrometer 36.

Die Steuerzentrale 61 ist derart programmiert, dass es zu einer Umschaltung des Schnüfflers 48 von stand by auf Lecksuchbetrieb (Umschaltung der Ventile 41 und 42) nicht kommt, solange der Annäherungsschalter 62, 63 geschlossen ist. Die gleichzeitige, zu Fehlmessungen führende Lecksuche über den Folien-Lecksucher 1 und über den Schnüffler 48 ist dadurch ausgeschlossen.

Bei der quantitativen Lecksuche interessiert den Benutzer in aller Regel die Leckrate eines aufgefundenen Lecks, gemessen in mbar l/sec.

Bei der Untersuchung von mit hohen Stückzahlen hergestellten Prüflingen besteht jedoch auch ein Interesse daran, die Konzentration des Testgases im Prüfling zu messen. Dieses kann dadurch geschehen, dass die Schnüffelspitze 53 in den Prüfling eingestochen wird, oder dass der Prüfling mit einem definierten Leck versehen wird und im Folien-Lecksucher 1 ein Lecksuchzyklus ausgeführt wird. Die Steuerzentrale ist deshalb so ausgebildet, dass auf einem nicht dargestellten Display sowohl die Leckrate als auch die Konzentration ablesbar ist.

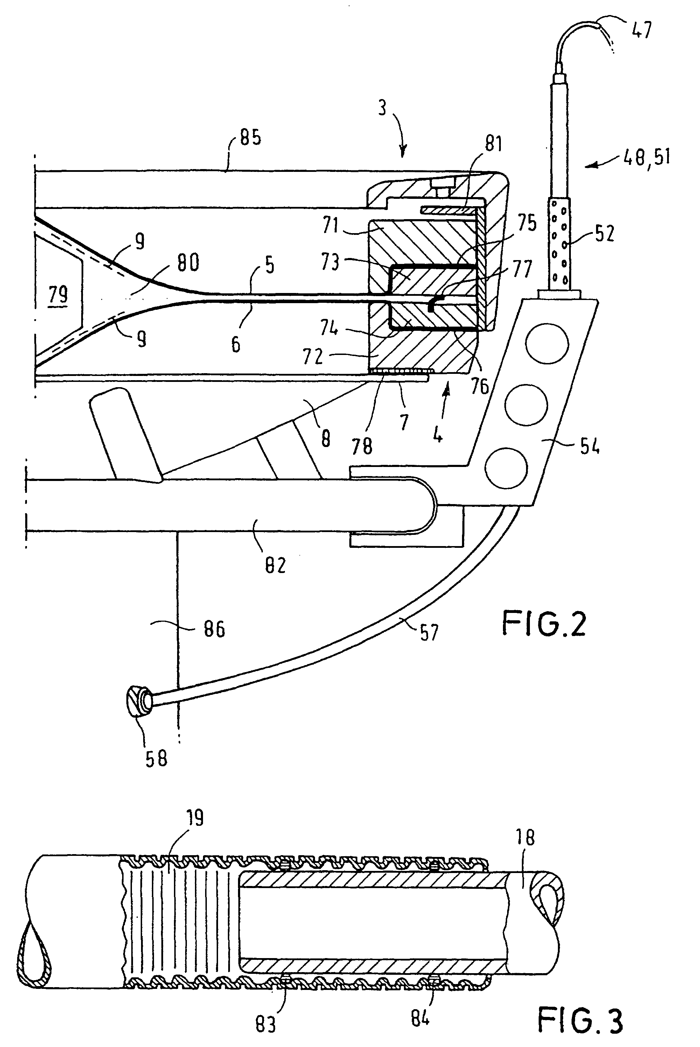

Figur 2 lässt den Aufbau der Rahmen 3 und 4 erkennen. Sie bestehen aus jeweils einem äußeren Ring 71 bzw. 72 und einem inneren Ring 73, 74. Zwischen den Ringpaaren sind die Folien 5, 6 befestigt, vorzugsweise geklebt. Die jeweils inneren Ringe befinden sich in zueinander korrespondierenden Aussparungen 75, 76. Die Aussparungen sind derart angeordnet, dass die äußeren Ringe 71, 72 in ihren dem Testraum zugewandten Bereichen einander unmittelbar gegenüberliegen und dadurch die Ebenen der eingespannten Folien 5, 6 bestimmen. Im äußeren Bereich liegen die inneren Ringe 73, 74 einander unmittelbar gegenüber. Zwischen ihnen befindet sich eine Lippendichtung 77. Die Folien 5, 6 erstrecken sich durch den winkelförmigen Spalt zwischen den jeweiligen Ringpaaren und sind damit vollflächig verklebt.

In Figur 2 ist noch ersichtlich, dass die Folien 5, 6 bei einem dazwischen eingelegten Prüfling 79 einen Testraum 80 bilden. Die Vlies-Abschnitte 9 sichern die Bildung eines zusammenhängenden Testraumes 80.

Der Ring 72 des unteren Rahmens 4 stützt sich auf dem Rand 7 des tellerförmigen Bodens 8 ab und ist mit diesem verklebt (Klebeschicht 78). Dem oberen Rahmen 3 ist ein Träger zugeordnet, der von einem den Rahmen 3 von außen und teilweise von oben umfassendes Stahlprofil 81 gebildet wird. Der Rahmen 3 ist in axialer Richtung schwimmend am Stahlprofil 81 befestigt, so dass er nach seinem Absenken gleichmäßig dem gesamten Umfang des Rahmens 4 aufliegt. Durch die Evakuierung des Testraumes 80 wird zusätzlich noch eine Anpresskraft erzeugt. In axialer Richtung erstreckt sich das Stahlprofil 81 über den Rahmen 3 hinaus nach unten und bildet in der letzten Phase der Absenkbewegung eine Führung. Zur Abdeckung des Stahlringes 81 dient der Detektorring 85.

Figur 2 zeigt noch, dass der dargestellte Folien-Lecksucher mit einem umlaufenden Handgriff 82 ausgerüstet ist. An diesem ist der Halter 54 für den Schnüffler 48 befestigt. Im Halter 54 befinden sich die bereits zu Figur 2 beschriebenen Mittel die erkennen lassen, ob die Sonde 51 des Schnüfflers 48 im Halter 54 abgelegt ist oder nicht. Zwischen dem Halter 54 und dem Gehäuse 86 erstreckt sich der Kapillarschlauch 57, der in die Kupplung 58 eingesteckt ist.

Figur 3 zeigt den Übergang zwischen dem Anschlussstutzen 18 und dem weiterführenden Leitungsabschnitt 19. Beide bestehen aus Kunststoff, vorzugsweise Polyamid. Der Leitungsabschnitt 19 ist als Wellrohr ausgebildet und umgibt gemeinsam mit Dichtringen 83, 84 den Anschlussstutzen 18.

Wie weiter oben erwähnt, kann der Lecksucher 1 auch dazu verwendet werden, um die Konzentration des Testgases im Prüfling zu messen, wenn dieser mit einem Leckversehen wird. Die Erzeugung eines ausreichend kleinen Lecks in der Wandung eines Prüflings ist schwierig. Bereits durch das Einstechen einer relativ dünnen Nadel entsteht ein Grobleck, das keine sichere Konzentrationsmessung mehr zulässt. Es besteht die Gefahr, dass das Testgas bereits zu Beginn des Lecksuchzyklus', also während der Evakuierung des Testraumes und vor dem Umschalten auf Leckmessung, vollständig aus dem Prüfling austritt. Im Rahmen der Erfindung wird deshalb weiter vorgeschlagen, den Prüfling mit einem definierten Leck zu versehen. Dieses geschieht dadurch, dass der zu untersuchende Prüfling z.B. mit einer Nadel angestochen und danach das Loch sofort mit einem Flickenleck verschlossen wird. Da der Totaldruck innerhalb und außerhalb der Packung in aller Regel gleich oder zumindest nicht wesentlich verschieden ist, verändert sich zwischen dem Aufstechen und dem Aufbringen des Flickenlecks nichts bzw. nur wenig an der Konzentration im Prüfling. Danach erfolgt eine erneute Lecksuche im Testraum. Das Flickenleck stellt eine definierte Undichtheit dar. Diese Undichtheit ist so gering, dass sich während der Prüfung die Konzentration in der Verpackung nicht ändert. Das bei dieser Prüfung angezeigte Leckratensignal ist ein Maß für die in der Packung befindliche Testgaskonzentration.

Weitere Vorteile und Einzelheiten der Erfindung sollen an Hand einer Figur erläutert werden.

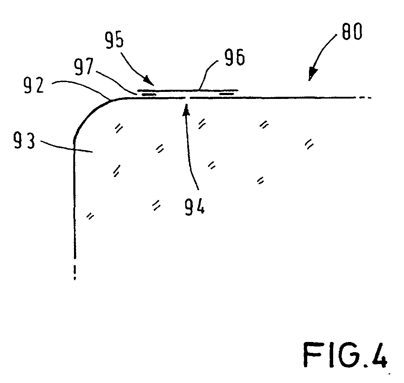

Die Figur 4 zeigt einen Teil eines Prüflings 80 mit einer relativ dünnen Wandung 92 (z.B. einer Verpackungshülle) und mit seinem Inhalt 93, bei dem es sich um einen verpackten Gegenstand beliebiger Art (auch Pulver) handeln kann. Werden Prüflinge 80 dieser Art in großen Stückzahlen hergestellt, dann ist es zweckmäßig, in zumindest einige dieser Prüflinge ein Testgas einzubringen, um sie stichprobenartig auf Lecks untersuchen zu können. Bei der Verwendung von Helium als Testgas geschieht das zweckmäßig mit einer Konzentration von 5 bis 25 %, vorzugsweise 10 %. Sollte bei einer stichprobenartigen Leckuntersuchung des dargestellten, noch unversehrten Prüflings 80 Helium nicht nachgewiesen worden sein, dann muss festgestellt werden, ob es sich tatsächlich um einen dichten Prüfling handelt. Dieses geschieht durch eine Messung der Konzentration des Testgases im Prüfling. Dazu wird der Prüfling z.B. mit einer Nadel mit einem Leck 94 versehen, über das das Flickenleck 95 aufgebracht wird. Danach wird die Verpackung nochmals in den Testraum eingelegt und auf ein Leck untersucht. Aus dem Ergebnis lassen sich - wie weiter oben beschrieben - Rückschlüsse auf die Produktionsqualität ableiten.

Das Flickenleck 95 besteht aus einem sehr dünnen, für das Testgas durchlässigen Folienabschnitt 96. Haftet dieser nicht selbst, kann er mit einem Kleberand 97 ausgerüstet sein. Das Flickenleck wird dann nach Art eines Pflasters auf das durch Einstechen der Verpackung erzeugte Leck 94 aufgeklebt. Als Werkstoff für die Folie hat sich Fluorcarbon als zweckmäßig erwiesen. Die Dicke und die freie Fläche der Folie bestimmen die Leckrate. Bezüglich Helium als Testgas gilt, dass eine Fluorcarbon-Folie mit einer Dicke von 25 γm eine Leckrate von ca. 10⁻⁴ mb.l/s.cm² hat.

## Patentansprüche

1. Folien-Lecksucher mit einem Testraum (80), mit einem Testgasdetektor (29), mit zwei Vakuumpumpen (13, 30), mit Verbindungsleitungen (11, 19, 21, 26, 27, 28, 38) zwischen den genannten Bauteilen und mit Ventilen (12, 22, 23, 41, 42) in Verbindungsleitungen, bei welchem
- der Testraum (80) von zwei Folien (5, 6) gebildet wird, die in jeweils einem Rahmen (3, 4) eingespannt sind,
- einer (4) der Rahmen (3, 4) mit mehreren Bohrungen ausgerüstet ist, die über Leitungsabschnitte (10) und eine sich daran anschließende gemeinsame erste Leitung (11) mit einem ersten Ventil (12) mit einer ersten (13) der beiden Vakuumpumpen (13, 30) verbunden sind,
- eine (6) der Folien (5, 6) etwa in ihrer Mitte mit einem Leitungsanschluss (18) ausgerüstet ist, an den sich eine zweite Leitung (19, 21) mit einem zweiten Ventil (22) anschließt, und
- der Testgasdetektor (29) über eine dritte Leitung (28) mit der zweiten Vakuumpumpe (30) verbunden ist,
**dadurch gekennzeichnet,**
- **dass** die zweite Leitung (21) in eine vierte Leitung (38) mündet, die an die erste Leitung (11) angeschlossen ist, und zwar zwischen dem ersten Ventil (12) und der ersten Vakuumpumpe (13),
- **dass** eine fünfte Leitung (27) mit einem dritten Ventil (33) vorgesehen ist, die sich zwischen der zweiten Leitung (21) und der dritten Leitung (28) erstreckt, wobei die fünfte Leitung (27) an den sich zwischen dem Leitungsanschluss (18) und dem zweiten Ventil (22) liegenden Abschnitt der zweiten Leitung (21) angeschlossen ist, und
- **dass** Bestandteile des Testgasdetektors (29) eine Turbomolekularvakuumpumpe (35) und ein mit deren Einlass verbundenes Massenspektrometer (36) sind.

2. Folien-Lecksucher nach Anspruch 1, **dadurch gekennzeichnet, dass** Bestandteil der zweiten Leitung (19, 21) ein Partikelfilter (20) ist, der sich zwischen dem Leitungsanschluss (18) und dem zweiten Ventil (22) befindet.

3. Folien-Lecksucher nach Anspruch 1 oder 2, **dadurch gekennzeichnet, dass** eine sechste Leitung (26) mit einem Drosselventil (32) vorgesehen ist, welche sich zwischen der zweiten Leitung (21) und der dritten Leitung (28) erstreckt, wobei die sechste Leitung (26) an den sich zwischen dem Leitungsanschluss (18) und dem zweiten Ventil (22) liegenden Abschnitt der zweiten Leitung (21) angeschlossen ist.

4. Folien-Lecksucher nach einem der Ansprüche 1 bis 3, **dadurch gekennzeichnet, dass** er mit einer Steuerzentrale (61) ausgerüstet ist.

5. Folien-Lecksucher (1) nach Anspruch 4, **dadurch gekennzeichnet, dass** die Rahmen (3, 4) mit einem Schalter (62, 63), vorzugsweise mit einem Annäherungsschalter, ausgerüstet sind, der das Aufeinanderliegen der Rahmen (3, 4) erkennen lässt.

6. Folien-Lecksucher nach einem der Ansprüche 4 oder 5, **dadurch gekennzeichnet, dass** er mit einem Schnüffler (48) ausgerüstet ist, der eine Schnüffelsonde (51) und einen Halter (54) dafür aufweist, und dass der Halter (54) mit Mitteln ausgerüstet ist, die die Ablage der Schnüffelsonde (51) im Halter (54) erkennen lassen.

7. Verfahren zur Durchführung der Lecksuche mit Hilfe eines Folien-Lecksuchers mit einem Testraum (80), mit einem Testgasdetektor (29), mit zwei Vakuumpumpen (13, 30), mit Verbindungsleitungen (11, 19, 21, 26, 27, 28, 38) zwischen den genannten Bauteilen und mit Ventilen (12, 22, 23, 41, 42) in Verbindungsleitungen, bei welchem
- der Testraum (80) von zwei Folien (5, 6) gebildet wird, die in jeweils einem Rahmen (3, 4) eingespannt sind,
- einer (4) der Rahmen (3, 4) mit mehreren Bohrungen ausgerüstet ist, die über Leitungsabschnitte (10) und eine sich daran anschließende gemeinsame erste Leitung (11) mit einem ersten Ventil (12) mit einer ersten (13) der beiden Vakuumpumpen (13, 30) verbunden sind,
- eine (6) der Folien (5, 6) etwa in ihrer Mitte mit einem Leitungsanschluss (18) ausgerüstet ist, an den sich eine zweite Leitung (19, 21) mit einem zweiten Ventil (22) anschließt, und
- der Testgasdetektor (29) über eine dritte Leitung (28) mit der zweiten Vakuumpumpe (30) verbunden ist, wobei
- die zweite Leitung (21) in eine vierte Leitung (38) mündet, die an die erste Leitung (11) angeschlossen ist, und zwar zwischen dem ersten Ventil (12) und der ersten Vakuumpumpe (13),
- eine fünfte Leitung (27) mit einem dritten Ventil (33) vorgesehen ist, die sich zwischen der zweiten Leitung (21) und der dritten Leitung (28) erstreckt, wobei die fünfte Leitung (27) an den sich zwischen dem Leitungsanschluss (18) und dem zweiten Ventil (22) liegenden Abschnitt der zweiten Leitung (21) angeschlossen ist, und
- Bestandteile des Testgasdetektors (29) eine Turbomolekularvakuumpumpe (35) und ein mit deren Einlass verbundenes Massenspektrometer (36) sind,
**dadurch gekennzeichnet,**
- **dass** während einer ersten Phase der Evakuierung des Testraumes (80), welche über die Bohrungen im Rahmen (4) und über die erste Leitung (11) sowie über den Leitungsanschluss (18) und die zweite Leitung (19, 21) erfolgt, nur die erste Vakuumpumpe (13) verwendet wird, indem bei geschlossenem dritten Ventil (33) das erste Ventil (12) und das zweite Ventil (22) geöffnet werden,
- **dass** nach dem Erreichen eines in der Größenordnung des Vorvakuumdruckes der Turbomolekularpumpe (35) liegenden Druckes der Evakuierprozess fortgesetzt wird, indem das erste Ventil (12) und das zweite Ventil (22) geschlossen und das dritte Ventil (33) geöffnet wird, so dass während dieses fortgesetzten Evakuierprozesses nur die zweite Vakuumpumpe (30) verwendet wird, und
- **dass** während dieses fortgesetzten Evakuierprozesses eine empfindliche Lecksuche durchgeführt wird.

8. Verfahren nach Anspruch 7 mit Hilfe eines Folien-Lecksuchers, bei dem eine sechste Leitung (26) mit einem Drosselventil (32) vorgesehen ist, welche sich zwischen der zweiten Leitung (21) und der dritten Leitung (28) erstreckt, wobei die sechste Leitung (26) an den sich zwischen dem Leitungsanschluss (18) und dem zweiten Ventil (22) liegenden Abschnitt der zweiten Leitung (21) angeschlossen ist, **dadurch gekennzeichnet, dass** während der ersten Phase der Evakuierung des Testraumes (80), und zwar beim Erreichen eines Druckes von wenigen 100 mbar, eine Groblecksuche durchgeführt wird, indem das Drosselventil (32) geöffnet wird, so dass durch ein gegebenenfalls vorhandenen Grobleck im Prüfling strömendes Testgas in den Einlassbereich des Testgasdetektors (29) gelangen kann, wobei das Drosselventil (32) nur so weit geöffnet wird, dass der notwendige Vorvakuumdruck der Turbomolekularpumpe (35) im Testgasdetektor (29) keine unzulässig hohen Werte annimmt.

9. Verfahren nach Anspruch 8, **dadurch gekennzeichnet, dass** vor dem Beginn des Lecksuchzyklus' eine Überprüfung des Testgas-Untergrundes durchgeführt wird.

10. Verfahren nach einem der Anspruch 9, **dadurch gekennzeichnet, dass** zur Entfernung eines erhöhten Testgas-Untergrundes die zweite Vakuumpumpe (30) mit Gasballast betrieben wird.

11. Verfahren nach einem der Ansprüche 7 bis 10, **dadurch gekennzeichnet, dass** ein Prüfling (79), der sich bei einer Leckprüfung im Testraum (80) als undicht erwiesen hat, anschließend mit Hilfe eines Schnüfflers (48) zwecks Ortung des Lecks untersucht wird.

12. Verfahren nach Anspruch 11, **dadurch gekennzeichnet, dass** sowohl bei der Lecksuche im Testraum (80) als auch bei der Schnüffel-Lecksuche derselbe Leckdetektor (29) verwendet wird.

13. Verfahren nach Anspruch 12, **dadurch gekennzeichnet, dass** die Lecksuche im Testraum und die Schnüffel-Lecksuche nicht gleichzeitig durchgeführt werden können.

14. Verfahren nach einem der Ansprüche 8 bis 11, **dadurch gekennzeichnet, dass** bei einem Prüfling, aus dem während der Lecksuche im Testraum (80) Testgas nicht ausgetreten ist, anschließend eine Messung der Testgas-Konzentration des im Prüfling vorhandenen Gases durchgeführt wird.

15. Verfahren nach Anspruch 14, **dadurch gekennzeichnet, dass** zur Kontrolle der Testgaskonzentration in den Prüflingen die Testgaskonzentration in mindestens einem der Prüflinge gemessen wird, indem seine Wandung (92) mit einem Leck (94) versehen wird, und dass mit diesem Prüfling ein Lecksuchvorgang durchgeführt wird.

16. Verfahren nach Anspruch 15, **dadurch gekennzeichnet, dass** der Prüfling, der der Kontrolle der Testgaskonzentration dient, ein Prüfling ist, der sich bei einem vorhergegangenen Lecksuchvorgang als dicht erwiesen hat.

17. Verfahren nach Anspruch 16 oder 17, **dadurch gekennzeichnet, dass** das Leck (94) unmittelbar nach seiner Erzeugung mit einem für Testgas durch-lässigen Flickenleck (95) verschlossen wird, das aus einem für Testgas durchlässigen Folienabschnitt (96) besteht.

## Claims

1. Film leak detector with a test chamber (80), with a test gas detector (29), with two vacuum pumps (13, 30), with connection lines (11, 19, 21, 26, 27, 28, 38) between the above-mentioned structural parts, and with valves (12, 22, 23, 41, 42) in connection lines, in which
- the test chamber (80) is formed by two films (5, 6) which are stretched in a respective frame (3, 4),
- one (4) of the frames (3, 4) is equipped with a plurality of bores which communicate with a first (13) of the two vacuum pumps (13, 30) via line sections (10) and an adjoining common first line (11) with a first valve (12),
- one (6) of the films (5, 6) is equipped approximately in its centre with a line connection (18) which is adjoined by a second line (19, 21) with a second valve (22), and
- the test gas detector (29) communicates with the second vacuum pump (30) via a third line (28),
**characterised in**
- **that** the second line (21) leads into a fourth line (38) which is connected to the first line (11), this being effected between the first valve (12) and the first vacuum pump (13),
- **that** a fifth line (27) with a third valve (33) is provided, which line extends between the second line (21) and the third line (28), wherein the fifth line (27) is connected to the section of the second line (21) which lies between the line connection (18) and the second valve (22), and
- **that** components of the test gas detector (29) are a turbomolecular vacuum pump (35) and a mass spectrometer (36) which communicates with the inlet of the latter.

2. Film leak detector according to Claim 1, **characterised in that** a component of the second line (19, 21) is a particle filter (20) which is located between the line connection (18) and the second valve (22).

3. Film leak detector according to Claim 1 or 2, **characterised in that** a sixth line (26) with a throttle valve (32) is provided, which line extends between the second line (21) and the third line (28), wherein the sixth line (26) is connected to the section of the second line (21) which lies between the line connection (18) and the second valve (22).

4. Film leak detector according to any one of Claims 1 to 3, **characterised in that** it is equipped with a control centre (61).

5. Film leak detector (1) according to Claim 4, **characterised in that** the frames (3, 4) are equipped with a switch (62, 63), preferably with a proximity switch, which indicates the superimposition of the frames (3, 4).

6. Film leak detector according to either of Claims 4 and 5, **characterised in that** it is equipped with a sniffer (48) which comprises a sniffer probe (51) and a holder (54) for the latter, and that the holder (54) is equipped with means which indicate that the sniffer probe (51) is deposited in the holder (54).

7. Method for carrying out the leak detection by means of a film leak detector with a test chamber (80), with a test gas detector (29), with two vacuum pumps (13, 30), with connection lines (11, 19, 21, 26, 27, 28, 38) between the above-mentioned structural parts, and with valves (12, 22, 23, 41, 42) in connection lines, in which
- the test chamber (80) is formed by two films (5, 6) which are stretched in a respective frame (3, 4),
- one (4) of the frames (3, 4) is equipped with a plurality of bores which communicate with a first (13) of the two vacuum pumps (13, 30) via line sections (10) and an adjoining common first line (11) with a first valve (12),
- one (6) of the films (5, 6) is equipped approximately in its centre with a line connection (18) which is adjoined by a second line (19, 21) with a second valve (22), and
- the test gas detector (29) communicates with the second vacuum pump (30) via a third line (28), wherein
- the second line (21) leads into a fourth line (38) which is connected to the first line (11), this being effected between the first valve (12) and the first vacuum pump (13),
- a fifth line (27) with a third valve (33) is provided, which line extends between the second line (21) and the third line (28), wherein the fifth line (27) is connected to the section of the second line (21) which lies between the line connection (18) and the second valve (22), and
- components of the test gas detector (29) are a turbomolecular vacuum pump (35) and a mass spectrometer (36) which communicates with the inlet of the latter,
**characterised in**
- **that** during a first phase of evacuation of the test chamber (80), which takes place via the bores in the frame (4) and via the first line (11) as well as via the line connection (18) and the second line (19, 21), only the first vacuum pump (13) is used by opening the first valve (12) and the second valve (22), while the third valve (33) is closed,
- **that** after reaching a pressure of the order of magnitude of the forepressure of the tubomolecular pump (35) the evacuation process is continued by closing the first valve (12) and the second valve (22) and opening the third valve (33), so that only the second vacuum pump (30) is used during this continued evacuation process, and
- **that** a sensitive leak detection is carried out during this continued evacuation process.

8. Method according to Claim 7 by means of a film leak detector, in which a sixth line (26) with a throttle valve (32) is provided, which line extends between the second line (21) and the third line (28), wherein the sixth line (26) is connected to the section of the second line (21) which lies between the line connection (18) and the second valve (22), **characterised in that** during the first phase of evacuation of the test chamber (80), upon reaching a pressure of a few 100 mbar, a gross leak detection is carried out by opening the throttle valve (32), so that test gas flowing through any gross leak in the test sample can enter the inlet region of the test gas detector (29), wherein the throttle valve (32) is only opened to an extent such that the necessary forepressure of the turbomolecular pump (35) in the test gas detector (29) does not assume impermissibly high values.

9. Method according to Claim 8, **characterised in that** the test gas background is checked before the beginning of the leak detection cycle.

10. Method according to Claim 9, **characterised in that** the second vacuum pump (30) is operated with gas ballast in order to remove an increased test gas background.

11. Method according to any one of Claims 7 to 10, **characterised in that** a test sample (79) which has proved to be permeable in a leak test in the test chamber (80) is subsequently examined by means of a sniffer (48) for the purpose of locating the leak.

12. Method according to Claim 11, **characterised in that** the same leak detector (29) is used both for the leak detection in the test chamber (80) and for the sniffing leak detection.

13. Method according to Claim 12, **characterised in that** the leak detection in the test chamber and the sniffing leak detection cannot be carried out simultaneously.

14. Method according to any one of Claims 8 to 11, **characterised in that**, in the case of a test sample from which no test gas has issued during the leak detection in the test chamber (80), the test gas concentration of the gas present in the test sample is subsequently measured.

15. Method according to Claim 14, **characterised in that**, in order to check the test gas concentration in the test samples, the test gas concentration in at least one of the test samples is measured by providing its wall (92) with a leak (94), and that a leak detection operation is carried out with this test sample.

16. Method according to Claim 15, **characterised in that** the test sample which serves to check the test gas concentration is a test sample which has proved to be impermeable in a preceding leak detection operation.

17. Method according to Claim 16 or 17, **characterised in that** the leak (94) is closed immediately after being produced with a patch leak (95) which is permeable to test gas and which consists of a film section (96) which is permeable to test gas.

## Revendications

1. Détecteur de fuite à feuilles comportant un espace de test (80), un détecteur de gaz de test (29), deux pompes à vide (13, 30), des canalisations de liaison (11, 19, 21, 26, 27, 28, 38) entre les composants indiqués, et des soupapes (12, 22, 23, 41, 42) dans des canalisations de liaison, dans lequel
- l'espace de test (80) est formé par deux feuilles (5, 6), qui sont tendues dans respectivement un cadre (3, 4),
- l'un (4) des cadres (3, 4) est pourvu de plusieurs perçages, qui sont reliés par l'intermédiaire de tronçons de canalisations (10) et d'une première canalisation commune (11) raccordée à ces tronçons et comportant une première soupape (12), à une première (13) des deux pompes à vide (13, 30),
- l'une (6) des feuilles (5, 6) est équipée, approximativement en son centre, d'un raccord de canalisation (18), auquel se raccorde une seconde canalisation (18, 20) comportant une seconde soupape (22), et
- le détecteur de gaz de test (29) est relié à la seconde pompe à vide (30) par l'intermédiaire d'une troisième canalisation (28),
**caractérisé en ce**
- **que** la seconde canalisation (21) débouche dans une quatrième canalisation (38), qui est raccordée à la première canalisation (11), et ce entre la première soupape (12) et la première pompe à vide (13),
- **qu'**une cinquième canalisation (27) qui est équipée d'une troisième soupape (33) et s'étend entre la seconde canalisation (21) et la troisième canalisation (28), la cinquième canalisation (27) étant raccordée au tronçon de la seconde canalisation (21), qui est situé entre le raccord de canalisation (18) et la seconde soupape (22), et
- **que** des composants du détecteur de gaz de test (22) sont une pompe à vide turbomoléculaire (35) et un spectromètre de masse (36) relié à l'entrée de cette pompe.

2. Détecteur de fuite à feuilles selon la revendication 1, **caractérisé en ce qu'**un filtre à particules (20), qui est situé entre le raccord de canalisation (18) et la seconde soupape (22), fait partie de la seconde canalisation (19, 21).

3. Détecteur de fuite à feuilles selon la revendication 1 ou 2, **caractérisé en ce qu'**il est prévu une sixième canalisation (26) qui comporte une soupape d'étranglement (32) et s'étend entre la seconde canalisation (21) et la troisième canalisation (28), la sixième canalisation (26) étant raccordée au tronçon de la seconde canalisation (21), qui est situé entre le raccord de canalisation (18) et la seconde soupape (22).

4. Détecteur de fuite à feuilles selon l'une des revendications 1 à 3, **caractérisé en ce qu'**il est équipé d'une unité centrale de commande (61).

5. Détecteur de fuite à feuilles selon la revendication 4, **caractérisé en ce que** le cadre (3, 4) est équipé d'un interrupteur (62, 63), de préférence d'un interrupteur de proximité, qui permet d'identifier la superposition des cadres (3, 4).

6. Détecteur de fuite à feuilles selon l'une des revendications 4 ou 5, **caractérisé en ce qu'**il est équipé d'un renifleur (48), qui comporte une sonde de reniflage (51) et un dispositif un support (54) pour cette sonde et que le support (54) est équipé de moyens qui permettent d'identifier la position de la sonde de reniflage (51) dans le support (54).

7. Procédé pour réaliser la détection de fuites à l'aide d'un détecteur de fuite à feuilles comportant un espace de test (80), un détecteur de gaz de test (29), deux pompes à vide (13, 30), des canalisations de liaison (11, 19, 21, 26, 27, 28, 38) entre les composants indiqués, et des soupapes (12, 22, 23, 41, 42) dans des canalisations de liaison, selon lequel
- l'espace de test (80) est formé par deux feuilles (5, 6), qui sont tendues dans des cadres respectifs (3, 4),
- l'un (4) des cadres (3, 4) est pourvu de plusieurs perçages, qui sont reliés par l'intermédiaire de tronçons de canalisations (10) et d'une première canalisation commune (11) raccordée à ces tronçons et comportant une première soupape (12), à une première (13) des deux pompes à vide (13, 30),
- l'une (6) des feuilles (5, 6) est équipée, approximativement en son centre, d'un raccord de canalisation (18), auquel se raccorde une seconde canalisation (18, 20) comportant une seconde soupape (22), et
- le détecteur de gaz de test (29) est relié à la seconde pompe à vide (30) par l'intermédiaire d'une troisième canalisation (28),
dans lequel
- la seconde canalisation (21) débouche dans une quatrième canalisation (38), qui est raccordée à la première canalisation (11), et ce entre la première soupape (12) et la première pompe à vide (13),
- une cinquième canalisation (27) qui comporte une troisième soupape (33) et s'étend entre la seconde canalisation (29) et la troisième canalisation (28), la cinquième canalisation (27) étant raccordée au tronçon de la seconde canalisation (21), qui est située entre le raccord de canalisation (18) et la seconde soupape (22), et
- des composants du détecteur de gaz de test (22) sont une pompe à vide turbomoléculaire (35) et un spectromètre de masse (36) relié à l'entrée de cette pompe,
**caractérisé en ce**
- **que** pendant une première phase de l'établissement de vide dans l'espace de test (80), qui s'effectue au moyen des perçages situés dans le cadre (4) et au moyen de la première canalisation (11) ainsi qu'au moyen du raccord de canalisation (18) et de la seconde canalisation (19, 21), on utilise uniquement la première pompe à vide (13) en ouvrant la première soupape (12) et la seconde soupape (22) alors que la troisième soupape (33) est fermée,
- **qu'**une fois atteinte une pression de l'ordre de grandeur de la dépression pilote de la pompe turbomoléculaire (35), on poursuit le processus de création du vide en fermant la première soupape (12) et la seconde soupape (22) et en ouvrant la troisième soupape (33), de sorte que pendant la poursuite de ce processus de création de vide, seule la seconde pompe à vide (30) est utilisée, et
- **que** pendant la poursuite de ce processus de création de vide une détection sensible de fuite est exécutée.

8. Procédé selon la revendication 7 mis en oeuvre à l'aide d'un détecteur de fuite à feuilles, selon lequel il est prévu une sixième canalisation (26) qui comporte une soupape d'étranglement (32) et s'étend entre la seconde canalisation (21) et la troisième canalisation (28), la sixième canalisation (26) étant raccordée au tronçon de la seconde canalisation (21), qui est situé entre le raccord de canalisation (18) et la seconde soupape (22), **caractérisé en ce que** pendant la première phase de la création de vide dans l'espace de test (80) et ce lorsqu'est atteinte une pression de quelques centaines de mbars, on exécute une détection de fuite grossière en ouvrant la soupape d'étranglement (32), de sorte que le gaz de test, qui circule dans l'éprouvette en raison d'une fuite grossière éventuellement présente, peut parvenir dans la zone d'entrée du détecteur de gaz de test (29), la soupape d'étranglement (32) étant ouverte juste suffisamment pour que la dépression pilote nécessaire de la pompe turbomoléculaire (35) dans le détecteur à gaz de test (29) ne prenne aucune valeur élevée inadmissible.

9. Procédé selon la revendication 8, **caractérisé en ce qu'**avant le début du cycle de détection de fuite, un contrôle du fond de gaz de test est exécuté avant le début du cycle de détection de fluide.

10. Procédé selon la revendication 9, **caractérisé en ce que** pour éliminer un fond accru de gaz de test, on fait fonctionner la seconde pompe à vide (30) avec un ballast de gaz.

11. Procédé selon l'une des revendications 7 à 10, **caractérisé en ce qu'**on examine ensuite une éprouvette (79), qui s'est avérée non étanche lors d'un contrôle de fuite dans l'espace, de test (80), à l'aide d'un renifleur (48) pour localiser la fuite.

12. Procédé selon la revendication 11, **caractérisé en ce qu'**aussi bien dans le cas de la détection d'une fuite dans l'espace de test (80) que dans le cas de la détection d'une fuite par reniflage, on utilise le même détecteur de fuite (29).

13. Procédé selon la revendication 12, **caractérisé en ce que** la détection d'une fuite dans l'espace de test et la détection d'une fuite par reniflage ne peuvent pas être exécutées simultanément.

14. Procédé selon l'une des revendications 8 à 11, **caractérisé en ce que** dans le cas d'une éprouvette, hors de laquelle le gaz de test n'est pas sorti pendant la détection de fuite dans l'espace de test (80), une mesure de la concentration du gaz de test dans le gaz présent dans l'éprouvette est ensuite exécutée.

15. Procédé selon la revendication 14, **caractérisé en ce que** pour le contrôle de la concentration du gaz de test dans les éprouvettes, on mesure la concentration du gaz de test dans au moins l'une des éprouvettes, en prévoyant dans sa paroi (92) une fuite (94), et qu'on exécute avec cette éprouvette un processus de détection de fuite.

16. Procédé selon la revendication 15, **caractérisé en ce que** l'éprouvette, qui est utilisée pour la commande de la concentration du gaz de test, est une éprouvette qui s'est avérée étanche lors d'un processus antérieur de détection de fuite.

17. Procédé selon la revendication 16 ou 17, **caractérisé en ce que** la fuite (14) est obturée directement après sa production, avec un élément de réparation (94) perméable pour le gaz de test, qui est constitué par un morceau de feuille (96) perméable pour le gaz de test.
